# FASCICULE DE BREVET EUROPEEN

(11) **EP 1 868 845 B1**
(45) Date de publication et mention de la délivrance du brevet: **06.08.2008**
(21) Numéro de dépôt: 06726338.4
(22) Date de dépôt: 11.04.2006
(51) Int. Cl.: B60P 3/42, B62D 47/00

(54) **VEHICULE AUTOMOBILE TRANSFORMABLE**
KABRIOLETT
CONVERTIBLE MOTOR VEHICLE

(30) Priorité: 14.04.2005 FR 0503746
(43) Date de publication de la demande: 26.12.2007
(73) Titulaire: PEUGEOT CITROËN AUTOMOBILES S.A., 78140 Vélizy Villacoublay (FR)
(72) Inventeur: RAMES, Christian, F-78700 Conflans Sainte Honorine (FR)
(86) Numéro de dépôt international: PCT/FR2006/050332
(87) Numéro de publication internationale: WO 2006/108996

(56) Documents cités:
- EP-A- 1 234 756
- DE-A1- 10 028 777
- FR-A- 2 847 863
- US-A- 5 961 173
- US-B1- 6 851 741

## Description

La présente invention concerne un véhicule automobile de type berline transformable en un véhicule automobile de type à benne ouverte vers le haut, également appelé pick-up.

Un example de cette technique antérieure est divulgué par le document FR 2 847 863.

Les véhicules automobiles de type berline comportent, de manière classique, un habitacle contenant une rangée de sièges avant et une rangée de sièges arrière et un coffre délimité par un couvercle déplaçable entre une position de fermeture et une position d'ouverture et par une paroi arrière fixe. L'habitacle est séparé du coffre par une cloison s'étendant transversalement par rapport à l'axe longitudinal du véhicule.

Généralement, dans ce type de véhicule automobile, la rangée de sièges arrière est escamotable et la cloison de séparation est basculable entre une position sensiblement verticale de séparation de l'habitacle du coffre et une position sensiblement horizontale mettant en communication l'habitacle et le coffre afin d'augmenter longitudinalement le volume de chargement de ce coffre.

Mais, avec ce genre de véhicule, la capacité de chargement du coffre est limitée en hauteur par le couvercle.

On connaît également des véhicules automobiles à benne ouverte vers le haut, appelé pick-up, qui comportent à l'arrière d'une cabine constituée par la partie antérieure du véhicule, renfermant le poste de conduite, la benne ouverte vers le haut de forme généralement parallélépipédique.

La benne ouverte de ce type de véhicules comporte un plancher, deux parois latérales dans la direction longitudinale du véhicule et une paroi d'extrémité arrière ouvrante, située à l'opposé de la cabine. De tels véhicules présentent des avantages en ce qui concerne leur capacité de chargement par rapport à un véhicule classique ou même par rapport à un véhicule du type monocorps ou break, puisque le volume de chargement de la benne est pratiquement illimité du fait de l'absence d'un toit recouvrant ladite benne.

Par contre, les véhicules de ce type ne permettent pas de modifier le rapport entre le volume de chargement et celui alloué aux passagers, principalement à cause de la paroi fixe séparant l'habitacle de la benne et ne peuvent être utilisés qu'à des fins utilitaires et seulement par le conducteur et éventuellement un passager, ce qui limite leur intérêt dans le cas de leur utilisation par des particuliers.

L'invention a pour but d'éviter ces inconvénients en proposant un véhicule automobile transformable en un véhicule automobile de type à benne ouverte vers le haut dont le rapport entre le volume de chargement et le volume alloué aux passagers est modulable en fonction des charges et/ou des passagers à transporter.

L'invention a donc pour objet un véhicule automobile de type berline transformable en un véhicule automobile de type à benne ouverte vers le haut, appelé pick-up, et comportant, d'une part, un habitacle délimité par deux parois latérales, un pavillon et un plancher et contenant une rangée de sièges avant et une rangée de sièges arrière déplaçables entre une position d'utilisation et une position escamotée et, d'autre part, un coffre délimité par un couvercle, une paroi d'extrémité et une cloison transversale de séparation entre l'habitacle et le coffre et surmontée par une lunette arrière, caractérisé en ce que le couvercle est formé par deux demi-panneaux de coffre, un panneau avant fixé sur le bord supérieur de la cloison de séparation et un panneau arrière monté articulé sur le panneau avant et en ce que la lunette arrière est montée articulée sur le bord supérieur de la cloison de séparation et en ce que ladite cloison de séparation est montée articulée sur le plancher du véhicule.

Selon d'autres caractéristiques de l'invention :
- la lunette arrière est déplaçable par basculement vers l'avant du véhicule entre une première position de prolongement de la cloison de séparation et une seconde position escamotée rabattue contre cette cloison de séparation,
- le panneau arrière du couvercle est déplaçable par basculement entre une première position prolongeant le panneau avant et une seconde position rabattue sur ledit panneau avant,
- dans les secondes positions respectivement de la lunette arrière et du panneau arrière du couvercle, la cloison de séparation est déplaçable par basculement vers l'avant du véhicule entre une première position sensiblement verticale séparant l'habitacle du coffre et une seconde position sensiblement horizontale prolongeant le plancher dudit coffre,
- dans la seconde position de la cloison de séparation, les panneaux avant et arrière du couvercle de coffre s'étendent sensiblement verticalement derrière la rangée de sièges avant pour former une plaque d'arrêt de charges, et
- le pavillon comporte une partie arrière escamotable.

D'autres caractéristiques et avantages de l'invention apparaîtront au cours de la description qui va suivre, donnée à titre d'exemple et faite en référence aux dessins annexés, sur lesquels :
- la Fig. 1 est une vue schématique en coupe longitudinale de la partie arrière d'un véhicule automobile selon l'invention, dans la configuration de type berline,
- la Fig. 2 est une vue schématique à plus grande échelle montrant l'articulation de la cloison transversale de séparation de l'habitacle et du coffre, et
- les Figs. 3 à 6 sont des vues schématiques en coupe longitudinale de la partie arrière du véhicule automobile montrant les différentes étapes de transformation du véhicule de type berline en véhicule de type à benne ouverte vers le haut.

La partie arrière du véhicule automobile représentée schématiquement sur les figures correspond à celle d'un véhicule de type berline transformable, désigné par la référence générale 1, et qui comporte, d'une manière classique, une carrosserie formant, entre autres, un habitacle 2 et un coffre 3.

L'habitacle 2 contient une rangée de sièges avant 4 et une rangée de sièges arrière 5 qui est déplaçable entre une position d'utilisation et une position escamotée dans un plancher 6. Le coffre 3 est délimité par une cloison transversale 10 de séparation entre l'habitacle 2 et ledit coffre 3, une paroi d'extrémité arrière 11 ainsi que par deux parois latérales 12 qui se prolongent jusqu'à ladite paroi d'extrémité arrière 11. Ce coffre est également délimité, à sa partie inférieure, par un plancher 13 et, à sa partie supérieure, par un couvercle 20 qui s'étend entre le bord supérieur 10a de la cloison transversale 10 et le bord supérieur 11 a de la paroi d'extrémité 11.

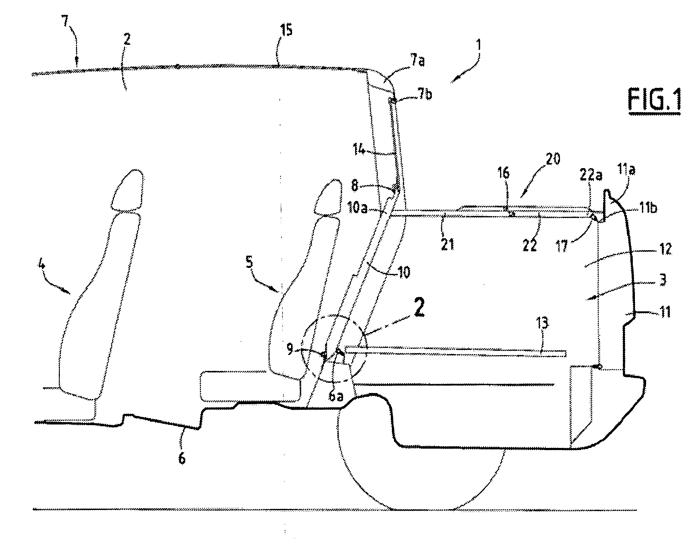

La cloison transversale 10 est surmontée par une lunette arrière 14 qui s'étend jusqu'au bord arrière 7a d'un pavillon 7. Cette lunette arrière 14 est montée articulée au moyen d'un axe transversal 8 sur le bord supérieur 10a de la cloison de séparation 10 et un joint d'étanchéité 7b est disposé sur le bord arrière 7a du pavillon 7 pour assurer l'étanchéité entre l'habitacle 2 et l'extérieur lorsque la lunette arrière 14 est dans la position de prolongement de la cloison de séparation 10, comme montré à la Fig. 1.

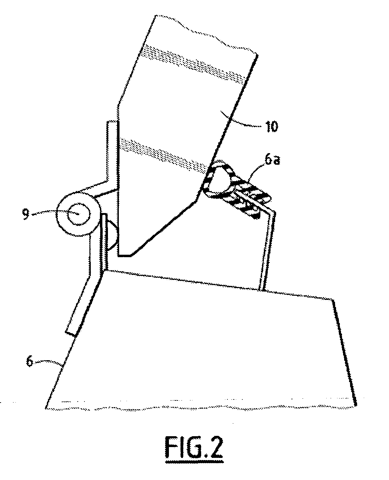

La cloison de séparation 10 est montée articulée sur le plancher 6 du véhicule au moyen d'un axe transversal 9 et un joint d'étanchéité 6a est disposé entre le plancher 6 et la cloison de séparation 10 de façon à assurer l'étanchéité entre l'habitacle 2 et le coffre 3 lorsque cette cloison 10 est dans sa position de séparation entre ledit habitacle 2 et ledit coffre 3, comme montré à la Fig. 2.

Ainsi que représenté à la Fig. 1, le couvercle 20 se compose de deux demi-panneaux de coffre, un panneau avant 21 et un panneau arrière 22. Le panneau avant 21 est fixé sur le bord supérieur 10a de la cloison transversale 10 et le panneau arrière 22 est monté articulé sur le panneau avant 21, au moyen d'un axe transversal 16.

Dans la position d'obturation de la partie supérieure du coffre 3, les deux demi-panneaux, respectivement avant 21 et arrière 22 du couvercle 20, sont placés dans le prolongement l'un de l'autre, comme cela apparaît à la Fig. 1.

Dans cette configuration, le bord arrière 22a du panneau arrière 22 est en appui sur un rebord 11 b ménagé dans la paroi d'extrémité 11 et ce rebord 11 b est pourvu d'un joint d'étanchéité 17 assurant l'étanchéité entre le panneau arrière 22 et la paroi d'extrémité 11. De même, les bords latéraux des deux panneaux 21 et 22 sont en appui sur un rebord, non représenté, ménagé dans chaque paroi latérale 12 et un joint d'étanchéité, non représenté, est disposé entre ces bords latéraux des panneaux 21 et 22 et la paroi 12 correspondante.

Le panneau arrière 22 du couvercle 20 peut être équipé d'un élément de verrouillage de type classique, comme par exemple une serrure, non représentée, pour maintenir le couvercle 2 dans la position de fermeture du coffre 3.

De même, la vitre arrière 14 peut être pourvue d'un élément de blocage, non représenté, sur le bord arrière 7a du pavillon 7.

Selon le mode de réalisation représenté sur les figures, ce pavillon 7 comporte une partie arrière 15 escamotable entre une première position située dans le prolongement de la partie avant du pavillon 7 pour fermer complètement l'habitacle 2 et une seconde position d'ouverture de l'habitacle 2, comme on le verra ultérieurement.

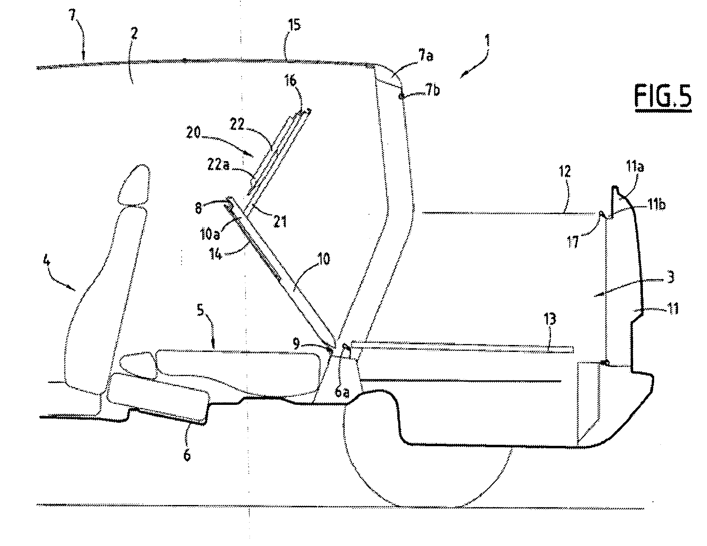

En se reportant maintenant aux Figs. 1 et 3 à 6, on va décrire les différentes étapes permettant à un utilisateur de transformer le véhicule automobile 1 de type berline en un véhicule automobile de type à benne ouverte vers le haut.

Tout d'abord, l'utilisateur procède au repliage de la rangée de sièges arrière 5 de façon à la placer dans un logement ménagé à cet effet dans le plancher 6 du véhicule automobile.

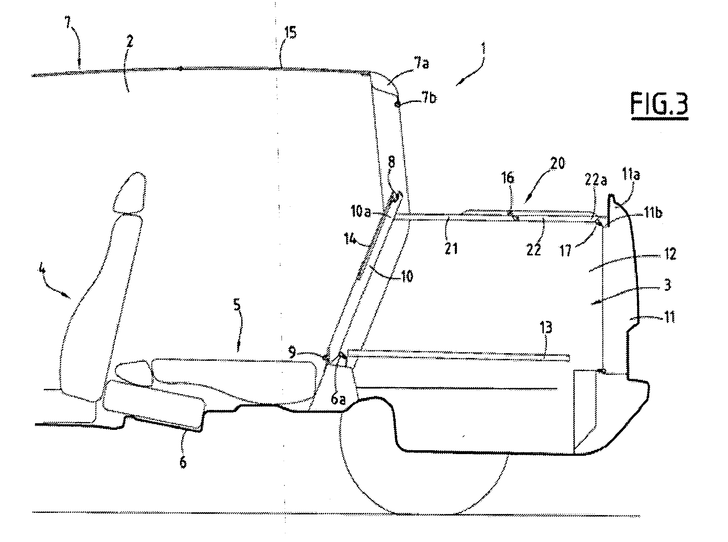

Ensuite, l'utilisateur déplace la lunette arrière 14 par basculement vers l'avant du véhicule entre une première position de prolongement de la cloison de séparation 10 (Fig. 1) et une seconde position escamotée rabattue contre cette cloison de séparation 10 (Fig. 3).

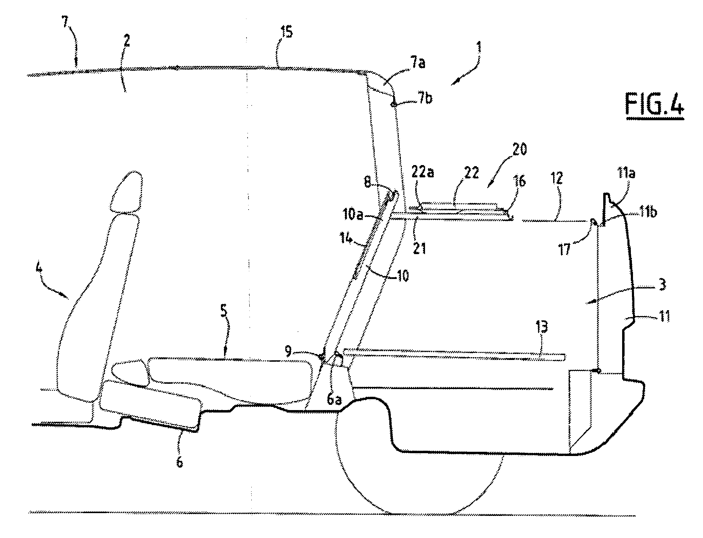

L'utilisateur déplace par basculement autour de l'axe d'articulation 16, le panneau arrière 22 entre une première position prolongeant le panneau avant 21 (Fig. 1) et une seconde position rabattue sur ce panneau avant 21 (Fig. 4).

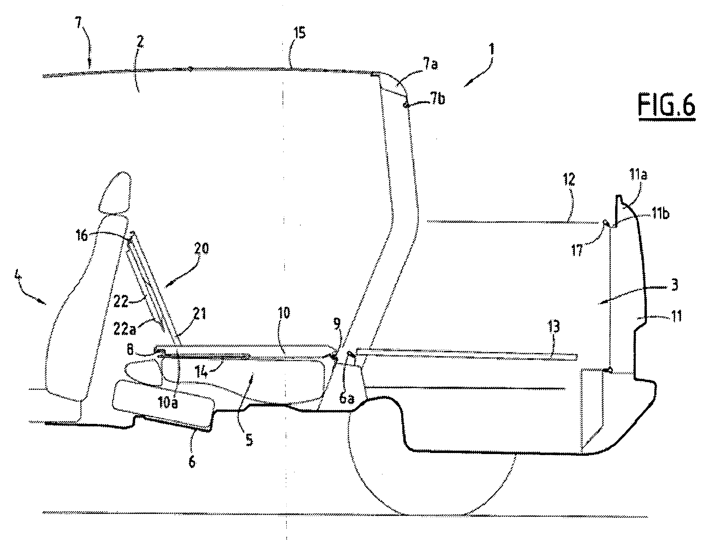

Dans la configuration représentée à la Fig. 4, c'est à dire avec la lunette arrière 14 rabattue sur la cloison de séparation 10 et le panneau arrière 22 rabattu sur le panneau avant 21 du couvercle 20, l'utilisateur, après avoir déverrouillé la cloison de séparation 10, déplace par basculement vers l'avant du véhicule ladite cloison de séparation 10 entre une première position sensiblement verticale séparant l'habitacle 2 du coffre 3 (Fig. 4) et une seconde position sensiblement horizontale prolongeant le plancher du coffre 13 (Fig. 6).

Dans la seconde position de la cloison de séparation 10 représentée à la Fig. 6, les panneaux avant 21 et arrière 22 du couvercle 20 de coffre s'étendent sensiblement verticalement derrière la rangée de sièges avant 4 pour former une plaque d'arrêt de charges.

Les étapes décrites précédemment et représentées aux figures 3 et 4 peuvent être inversées sans nuire à la transformation du véhicule.

Dans cette configuration, la partie arrière 15 du pavillon 7 peut être escamotée afin d'augmenter vers le haut le volume de chargement du véhicule automobile 1. Cette partie arrière 15 peut être déplacée de deux façons:
- elle peut coulisser au-dessous de la partie avant du pavillon, ou
- elle peut pivoter vers l'avant du véhicule autour d'un axe transversal de façon à venir dans le prolongement des dossiers de la rangée de sièges avant 4 pour isoler la partie avant de l'habitacle 2.

Pour remettre le véhicule en configuration berline, il suffit à l'utilisateur d'effectuer les mêmes opérations en sens inverse.

La paroi d'extrémité 11 peut également être basculable vers l'extérieur ce qui permet d'augmenter longitudinalement le volume de chargement du coffre 3 du véhicule automobile.

Le véhicule automobile selon l'invention permet de passer facilement d'une configuration de type berline à une configuration de type à benne ouverture vers le haut au moyen de mécanismes simples à mettre en oeuvre et de pouvoir disposer d'un volume de chargement important dans la configuration de type à benne ouverte vers le haut.

Le véhicule automobile selon l'invention est particulièrement économique du fait de sa polyvalence et il permet de transporter des passagers dans de bonnes conditions de confort et de protection climatique, et d'effectuer des transports de charges volumineuses.

## Revendications

1. Véhicule automobile de type berline transformable en un véhicule automobile de type à benne ouverte vers le haut, appelé pick-up, et comportant, d'une part, un habitacle (2) délimité par deux parois latérales, un pavillon (7) et un plancher (6) et contenant une rangée de sièges avant (4) et une rangée de siège arrière (5) déplaçables entre une position d'utilisation et une position escamotée et, d'autre part, un coffre (3) délimité par un couvercle (20), une paroi d'extrémité (11) et une cloison transversale (10) de séparation entre l'habitacle (2) et le coffre (3) et surmontée par une lunette arrière (14), **caractérisé en ce que** le couvercle (20) est formé par deux demi-panneaux de coffre, un panneau avant (21) fixé sur le bord supérieur (10a) de la cloison de séparation (10) et un panneau arrière (22) monté articulé sur le panneau avant (21) et **en ce que** la lunette arrière (14) est montée articulée sur le bord supérieur (10a) de la cloison de séparation (10) et **en ce que** ladite cloison de séparation (10) est montée articulée sur le plancher (6) du véhicule.

2. Véhicule automobile selon la revendication 1, **caractérisé en ce que** la lunette arrière (14) est déplaçable par basculement vers l'avant du véhicule entre une première position de prolongement de la cloison de séparation (10) et une seconde position escamotée rabattue contre cette cloison de séparation (10).

3. Véhicule automobile selon la revendication 1 ou 2, **caractérisé en ce que** le panneau arrière (22) du couvercle (20) est déplaçable par basculement entre une première position prolongeant le panneau avant (21) et une seconde position rabattue sur ledit panneau avant (21).

4. Véhicule automobile selon es revendications 2 et 3, **caractérisé en ce que** dans les secondes positions respectivement de la lunette arrière (14) et du panneau arrière (22) du couvercle (20), la cloison de séparation (10) est déplaçable par basculement vers l'avant du véhicule entre une position sensiblement verticale séparant l'habitacle (2) du coffre (3) et une seconde position sensiblement horizontale prolongeant le plancher (13) du coffre (3).

5. Véhicule automobile selon la revendication 4, **caractérisé en ce que** dans la seconde position de la cloison de séparation (10), les panneaux avant (21) et arrière (22) du couvercle (20) s'étendent sensiblement verticalement derrière la rangée de sièges avant (4) pour former une plaque d'arrêt de charges.

6. Véhicule automobile selon l'une quelconque des revendications 1 à 5, **caractérisé en ce que** le pavillon (7) comporte une partie arrière (15) escamotable.

## Claims

1. Saloon-type motor vehicle transformable into a motor vehicle of the type with an open-top cargo box, known as a pick-up, and comprising on the one hand a passenger compartment (2) defined by two side walls, a roof (7) and a floor (6), and containing a front row of seats (4) and a rear row of seats (5) that can be moved between a use position and a folded position, and on the other hand a boot (3) defined by a lid (20), an end wall (11) and a transverse dividing partition (10) between the passenger compartment (2) and the boot (3) and surmounted by a rear window (14), said vehicle being **characterized in that** the lid (20) is formed by two boot half-panels, a front panel (21) fixed to the upper edge (10a) of the dividing partition (10) and a rear panel (22) hinged to the front panel (21), **in that** the rear window (14) is hinged to the upper edge (10a) of the dividing partition (10), and **in that** said dividing partition (10) is hinged to the floor (6) of the vehicle.

2. Motor vehicle according to Claim 1, **characterized in that** the rear window (14) is pivotable towards the front of the vehicle between a first position in which it forms an extension of the dividing partition (10) and a second position in which it is folded against this dividing partition (10).

3. Motor vehicle according to Claim 1 or 2, **characterized in that** the rear panel (22) of the lid (20) is pivotable between a first position in which it forms an extension of the front panel (21) and a second position in which it is folded onto said front panel (21).

4. Motor vehicle according to Claims 2 and 3, **characterized in that**, in the respective second positions of the rear window (14) and of the rear panel (22) of the lid (20), the dividing partition (10) is pivotable towards the front of the vehicle between an approximately vertical position separating the passenger compartment (2) from the boot (3) and an approximately horizontal second position in which it forms an extension of the floor (13) of the boot (3).

5. Motor vehicle according to Claim 4, **characterized in that**, in the second position of the dividing partition (10), the front (21) and rear (22) panels of the lid (20) extend approximately vertically behind the front row of seats (4) to form a load arresting plate.

6. Motor vehicle according to any one of Claims 1 to 5, **characterized in that** the roof (7) has a folding rear portion (15).

## Patentansprüche

1. Kraftfahrzeug vom Typ Limousine, das in ein Kraftfahrzeug vom Typ mit nach oben offenem Wagenkasten umgewandelt werden kann, Pickup genannt, und das einerseits einen Innenraum (2), der von zwei Seitenwänden, einem Verdeck (7) und einem Boden (6) begrenzt wird und eine Reihe von Vordersitzen (4) und eine Reihe von Rücksitzen (5) aufweist, die zwischen einer Nutzstellung und einer umgeklappten Stellung beweglich sind, und andererseits einen Kofferraum (3) aufweist, der von einem Deckel (20), einer Endwand (11) und einer Quertrennwand (10) zur Abtrennung zwischen dem Innenraum (2) und dem Kofferraum begrenzt wird, über der ein Heckfenster (14) sitzt, **dadurch gekennzeichnet, dass** der Deckel (20) von zwei Kofferraum-Halbplatten gebildet wird, einer vorderen Platte (21), die am oberen Rand (10a) der Trennwand (10) befestigt ist, und einer hinteren Platte (22), die an die vordere Platte (21) angelenkt montiert ist, und dass das Heckfenster (14) auf den oberen Rand (10a) der Trennwand (10) angelenkt montiert ist, und dass die Trennwand (10) auf den Boden (6) des Fahrzeugs angelenkt montiert ist.

2. Kraftfahrzeug nach Anspruch 1, **dadurch gekennzeichnet, dass** das Heckfenster (14) durch Kippen zur Vorderseite des Fahrzeugs zwischen einer ersten Stellung der Verlängerung der Trennwand (10) und einer zweiten umgeklappten Stellung bewegt werden kann, in der es gegen diese Trennwand (10) heruntergeklappt ist.

3. Kraftfahrzeug nach Anspruch 1 oder 2, **dadurch gekennzeichnet, dass** die hintere Platte (22) des Deckels (20) durch Kippen zwischen einer ersten Stellung, die die vordere Platte (21) verlängert, und einer zweiten, auf die vordere Platte (21) heruntergeklappten Stellung beweglich ist.

4. Kraftfahrzeug nach den Ansprüchen 2 und 3, **dadurch gekennzeichnet, dass** in den zweiten Stellungen des Heckfensters (14) bzw. der hinteren Platte (22) des Deckels (20) die Trennwand (10) durch Kippen zur Vorderseite des Fahrzeugs zwischen einer im Wesentlichen senkrechten Stellung, die den Innenraum (2) vom Kofferraum (3) trennt, und einer zweiten im Wesentlichen waagrechten Stellung bewegt werden kann, die den Boden (13) des Kofferraums (3) verlängert.

5. Kraftfahrzeug nach Anspruch 4, **dadurch gekennzeichnet, dass** in der zweiten Stellung der Trennwand (10) die vordere (21) und hintere Platte (22) des Deckels (20) sich im Wesentlichen senkrecht hinter der vorderen Sitzreihe (4) erstrecken, um eine Ladungs-Sicherungsplatte zu bilden.

6. Kraftfahrzeug nach einem der Ansprüche 1 bis 5, **dadurch gekennzeichnet, dass** das Verdeck (7) einen hinteren umklappbaren Teil (15) aufweist.
